# EUROPEAN PATENT SPECIFICATION

(11) **EP 2 543 931 B1**
(45) Date of publication and mention of the grant of the patent: **30.12.2020**
(21) Application number: 12175436.0
(22) Date of filing: 06.07.2012
(51) Int. Cl.: F23R 3/34, F23D 14/50, F23D 14/48, F01D 25/00, F02C 7/22

(54) **APPARATUS AND SYSTEMS RELATING TO FUEL INJECTORS AND FUEL PASSAGES IN GAS TURBINE ENGINES**
VORRICHTUNG UND SYSTEME IN BEZUG AUF KRAFTSTOFFEINSPRITZER UND KRAFTSTOFFDURCHGÄNGE IN GASTURBINENMOTOREN
APPAREIL ET SYSTÈMES RELATIFS À DES INJECTEURS DE CARBURANT ET PASSAGES DE CARBURANT DANS DES MOTEURS À TURBINE À GAZ

(30) Priority: 06.07.2011 US 201113176784
(43) Date of publication of application: 09.01.2013
(73) Proprietor: General Electric Company, Schenectady, NY 12345 (US)
(72) Inventor: Belsom, Keith Cletus, Greenville, SC South Carolina 29615 (US); Lemon, Donald Timothy, Greenville, SC South Carolina 29615 (US)
(74) Representative: Freigutpartners IP Law Firm

(56) References cited:
- EP-A2- 0 687 864
- EP-A2- 2 375 163
- WO-A1-99/19674
- US-A- 5 475 979
- US-A1- 2011 083 701
- US-A1- 2011 289 928

## Description

### BACKGROUND OF THE INVENTION

The present disclosure generally relates to apparatus and systems for fuel passages within gas turbine engines, and more particularly relates to apparatus and systems for fuel passages that reduce flow variation due to rust and debris within a fuel supply.

Gas turbine engines include a compressor, a combustor, and a turbine. The compressor creates compressed air, which is supplied to the combustor. The combustor combusts the compressed air with fuel to generate an air-fuel mixture, which is supplied to the turbine. The turbine extracts energy from the air-fuel mixture to drive a load. In many cases, the gas turbine includes a number of combustors. The combustors may be positioned between the compressor and the turbine. For example, the compressor and the turbine may be aligned along a common axis, and the combustors may be positioned between the compressor and the turbine at an entrance to the turbine, in a circular array about the common axis. In operation, air from the compressor may travel into the turbine through one of the combustors.

The combustors may be operated at a relatively high temperature to ensure the mixture of air and fuel is adequately combusted, improving efficiency. One problem with operating the combustors at a high temperature is that a relatively high level of nitrogen oxides (NOx) may be generated, which may have a negative impact on the environment.

To reduce NOx emissions, many modern gas turbines employ fuel nozzles. For example, each combustor may be supported by a number of fuel nozzles, which may be positioned in a circular array about the combustor. During normal operation, the air from the compressor enters the combustor via the fuel nozzles. Within the fuel nozzles the air is mixed with fuel to form an air-fuel mixture. The air-fuel mixture is then combusted in the combustor. Pre-mixing the air and fuel permits operating the combustors at relatively lower temperatures, which reduces the NOx produced as a by-product of the combustion process.

To achieve further performance advantages, many combustors employ fuel injectors that are positioned upstream of the fuel nozzles. One such system, for example, is a fuel injector that is integrated within the combustor casing, which may be referred to herein as a combustor casing fuel injector. This type of fuel injector may be referred to as an annular quaternary fuel distributor. As described in more detail below, this type of system injects fuel into the compressed air discharged by the compressor as this flow of air moves toward the fuel nozzles. In certain cases, as described in more detail below, the combustor casing fuel injector injects fuel into an annulus passageway that is defined by the combustor casing and the cap assembly. It will be appreciated by one of ordinary skill in the art that pre-mixing fuel in this manner may be employed to mitigate combustor instability, to provide better fuel/air mixing, improve flame holding margin of the downstream fuel nozzles, as well as to reduce NOx emissions.

However, combustor casing fuel injectors present their own problems. Typically, in such systems, fuel is delivered into the combustion system by flowing from the gas manifold into an annulus that is integral to the combustion casing. From there the fuel flows down individual peg injectors or pegs that protrude into the air flow stream (i.e., into the annulus passageway that is defined between the combustor casing and the cap assembly). The fuel of the combustor casing fuel injector then is injected into the flowstream via small holes [approx. 0.127cm (0.05")] that are positioned along the peg injectors. It will be appreciated that this fuel mixes with the flow of compressed air and, downstream, is combusted within the burning zone or combustion chamber of the combustor.

In order meet cost objectives, the annular fuel manifold of the combustor casing fuel injector is constructed as an integral component of the combustor casing. As such, the annular fuel manifold is made of carbon steel, which, over time, means that rust will develop within this fuel passageway. Liberated rust pieces or other debris within the supply of fuel flow down into the pegs and cause a blockage, which may block fuel from flowing into the pegs, flowing through the pegs, or exiting the pegs through the injection holes. It will be appreciated that such blocked may lead to performance issues, such as less efficient engine operation, flame holding, emission problems, etc.

US 2011/083701 describes a method for conveying a chemical solution containing a phosphonic acid as an iron dissolving agent through the quaternary annulus chambers in forward combustion cans of a gas turbine to dissolve the iron oxide deposits and thereby facilitate cleaning of the internal fuel pathways. The method uses a cleaning flange attached to the quaternary fuel flange that has a flow directing baffle that enters the quaternary fuel orifice and directs the flow of cleaning solution in one direction in the quaternary annulus chamber.

WO 99/19694 describes a combustor for a gas turbine having a centrally located fuel nozzle and inner, middle and outer concentric cylindrical liners, the inner liner enclosing a primary combustion zone. The combustor has an air inlet that forms two passages for pre-mixing primary fuel and air to be supplied to the primary combustion zone. Each of the pre-mixing passages has a circumferential array of swirl vanes. A plurality of primary fuel tube assemblies extend through both pre-mixing passages, with each primary fuel tube assembly located between a pair of swirl vanes. Each primary fuel tube assembly is comprised of two tubular members. The first member supplies fuel to the first pre-mixing passage, while the second member, which extends through the first member, supplies fuel to the second pre-mixing passage. An annular fuel manifold is divided into first and second chambers by a circumferentially extending baffle. The proximal end of the first member is attached to the manifold itself while the proximal end of the second member is attached to the baffle. The distal end of the first member is attached directly to the second member at around its mid-point. The inlets of the first and second members are in flow communication with the first and second manifold chambers, respectively. Control valves separately regulate the flow of fuel to the two chambers and, therefore, to the two members of the fuel tube assemblies, thereby allowing the flow of fuel to the first and second pre-mixing passages to be separately controlled.

One solution, calls for the combustor casing fuel manifold to be made from materials that will not rust, such as Inco 625 alloy. This, however, raises costs considerably. Coatings that prevent rust also have been tested; however, as of yet, these have not proven successful. Accordingly, there is a need for apparatus and systems that effectively prevent rust and other debris from clogging combustor casing fuel injectors, while remaining cost-effective in application. Document US 5,475,979 discloses a gas turbine casing fuel arrangement exhibiting all the features of the preamble of claim 1 in connection with each other.

### BRIEF DESCRIPTION OF THE INVENTION

The present invention resides in a combustor casing fuel injector in a combustor of a combustion turbine engine as defined in the appended claims.

These and other features of the present application will become apparent upon review of the following detailed description of the preferred embodiments when taken in conjunction with the drawings and the appended claims.

### BRIEF DESCRIPTION OF THE DRAWINGS

Embodiments of the present invention will now be described, by way of example only, with reference to the accompanying drawings in which:
Figure 1 is a cross-sectional view of a known gas turbine engine, schematically illustrating a combustion system in which embodiments of the present invention may be employed.
Figure 2 is a cross-sectional view of a known combustor, schematically illustrating a fuel passage of conventional design.
Figure 3 is a cross-sectional view of the fuel passage of Figure 2.
Figure 4 is a cross-sectional view of a fuel passage within a combustor, schematically illustrating an exemplary embodiment in accordance with the present invention.

### DETAILED DESCRIPTION OF THE INVENTION

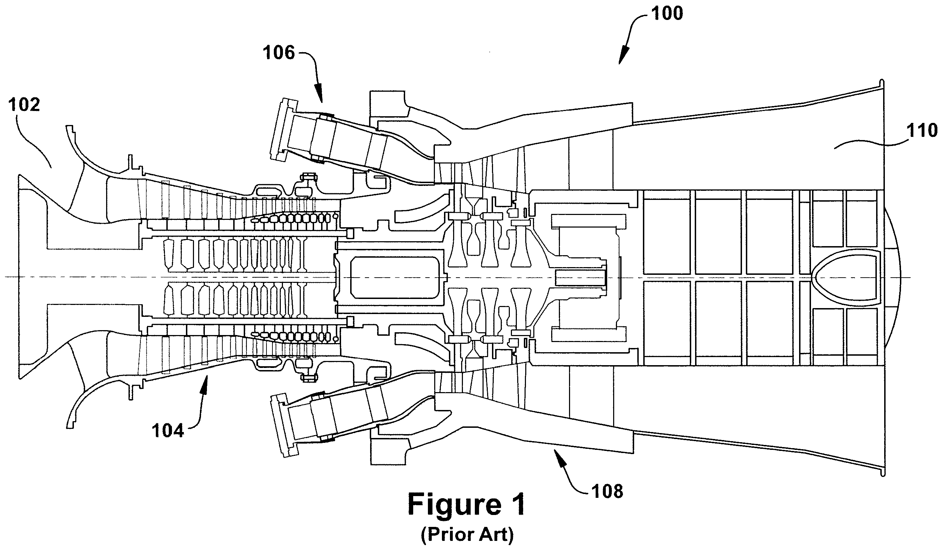

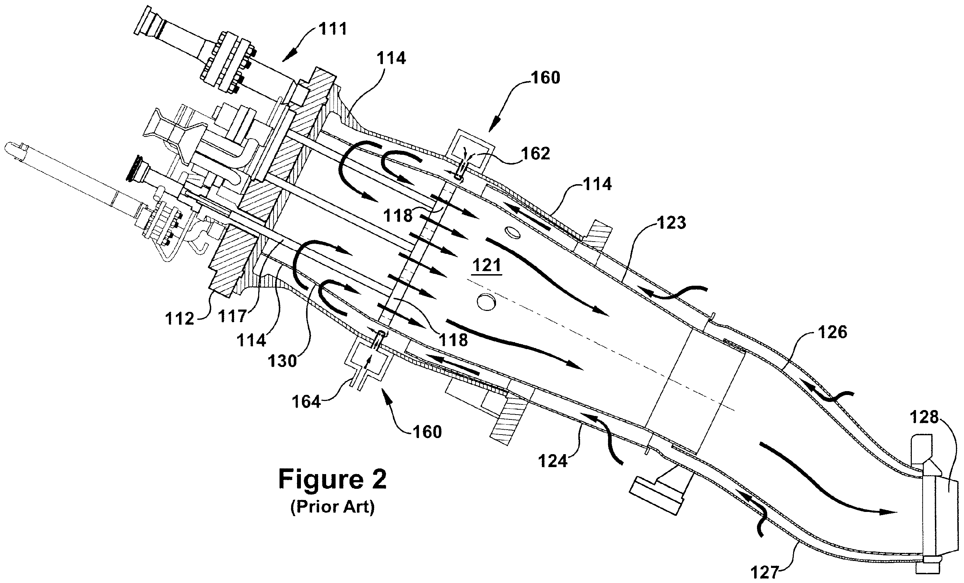

Figure 1 is a partial cross-sectional view of a known gas turbine engine 100 in which embodiments of the present invention may be used. As shown, the gas turbine engine 100 generally includes an intake section 102, a compressor 104, one or more combustors 106, a turbine 108, and an exhaust section 110. Each combustor 106 may include one or more fuel nozzles 118, as shown in Figure 2. The fuel nozzles 118 may be in parallel to each other in an array. For example, the fuel nozzles 118 may be arranged about an entrance to the combustor 106, such as in a circular configuration about a longitudinal axis of the combustor 106.

A flow path may be defined through the gas turbine 100. During normal operation, air may enter the gas turbine 100 through the intake section 102. The air may flow into the compressor 104, which may compress the air to form compressed air. The compressed air may flow through the fuel nozzles 118, which may mix the compressed air with fuel to form an air-fuel mixture. The air-fuel mixture may flow into the combustor 106, which may burn the air-fuel mixture to generate hot gases. The hot gases may flow into the turbine 108, which may extract energy from the hot gases, forming exhaust. Thereafter, the exhaust may be exhausted from the gas turbine 100 through the exhaust section 110.

Figure 2 illustrates an exemplary combustor 106 in a gas turbine engine in which embodiments of the present invention may be used. As one of ordinary skill in the art will appreciate, the combustor 106 may include a headend 111, which generally includes the various manifolds that supply the necessary air and fuel to the combustor 106, and an end cover 112. The combustor 106 may be enclosed within a combustor casing 114, as shown. A plurality of fuel lines 117 may extend through the end cover 112 to fuel injectors or fuel nozzles 118 that are positioned at the aft end of a cap assembly 119. The fuel nozzles 118, which may also be referred to as primary fuel injectors, represent the main source of fuel within the combustor 106. It will be appreciated that the cap assembly 119 generally is cylindrical in shape and fixed at a forward end to the end cover 112. The cap assembly 119 may be surrounded by the combustor casing 114. It will be appreciated by those of ordinary skill in the art that between the combustor casing 114 and the cap assembly 119, a combustor casing annulus 120 is formed.

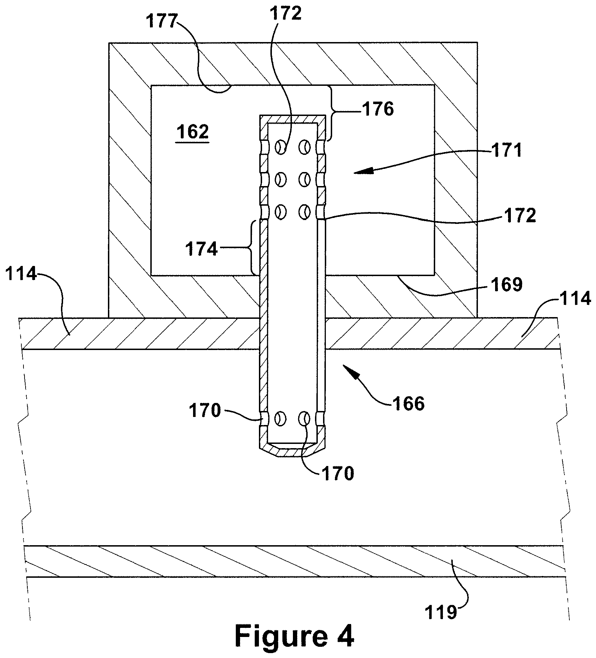

In general, the fuel nozzles 118 bring together a mixture of fuel and air for combustion. The fuel, for example, may be natural gas and the air may be compressed air (the flow of which is indicated in Figure 2 by the several arrows) supplied from the compressor 104. As one of ordinary skill in the art will appreciate, downstream of the fuel nozzles 118 is a combustion chamber 121 in which the combustion occurs. The combustion chamber 121 is generally defined by a liner 123, which is enclosed within a flow sleeve 124. Between the flow sleeve 124 and the liner 123 an annulus is formed. From the liner 123, a transition duct 126 transitions the flow from the circular cross section of the liner 123 to an annular cross section as it travels downstream to the turbine section (not shown in Figure 4). An impingement sleeve or outer wall 127 (hereinafter "outer wall 127") may enclose the transition duct 126, also creating an annulus between the outer wall 127 and the transition duct 126. At the downstream end of the transition duct 126, a transition piece aft frame 128 may direct the flow of the working fluid toward the airfoils that are positioned in the first stage of the turbine 108. It will be appreciated that the flow sleeve 124 and the outer wall 127 typically have impingement apertures (not shown in Figure 2) formed therethrough which allow an impinged flow of compressed air from the compressor 106 to enter the cavities formed between the flow sleeve 124 and the liner 123 and between the outer wall 127 and the transition duct 126. The flow of compressed air through the impingement apertures convectively cools the exterior surfaces of the liner 123 and the transition duct 126.

As shown, the cap assembly 119 may include a series of inlets 130 through which the supply of compressed air enters the interior of the cap assembly 119. The inlets 130 may be arranged parallel to each other, being spaced around the circumference of the cylindrical cap assembly 119, though other configurations are possible. In this arrangement, it will be appreciated that struts are defined between each of the inlets 130, which support the cap assembly structure during operation. It will be appreciated that the compressed air entering the combustor 106 through the flow sleeve 124 and the outer wall 127 is directed toward the cap assembly 119 via the flow annulus formed about the liner 123 and the transition duct 126. The compressed air then passes through the combustor casing annulus 120, which, as stated is section of the flow annulus that is formed between the cap assembly 119 and the combustor casing 114. Then, the compressed air enters the cap assembly 119 via the inlets 130, which are typically formed toward the forward end of the cap assembly 119. Upon entering the cap assembly 119, the flow of compressed air turn approximately 180° such that it moves toward the fuel nozzles 118 that are positioned toward the aft end of the cap assembly 119.

It will be appreciated that the combustor of Figure 2 further includes a fuel injector upstream of the fuel nozzles 118, which will be referred to herein as a combustor casing fuel injector 160. As stated, and unless otherwise stated, a combustor casing fuel injector 160 includes a fuel injector within the combustion system of a gas turbine engine 100 that injects fuel into the flow path at a position that is downstream of the compressor 104 and upstream of the fuel nozzles 118. In certain embodiments, however, a combustor casing fuel injector 160 is defined as a fuel injector that is positioned to inject fuel into the combustor casing annulus 120. Figure 2 provides an example of this type of combustor casing fuel injector 160.

More specifically, Figure 2 depicts an annular quaternary fuel distributor, which, as one of ordinary skill in the art will appreciate, is a known type of combustor casing fuel injector 160. As described in more detail below, this type of fuel injection system injects fuel into the compressor discharge as it moves through the combustor casing annulus 120. Premixing fuel in this manner may be employed to mitigate combustor instability, to provide better fuel/air mixing, improve flame holding margin of the downstream fuel nozzles, as well as to reduce NOx, CO or other emissions,.

As illustrated in Figure 2, the exemplary annular quaternary fuel distributor 160 includes an annular fuel manifold 162 that may encircle (either in segments or continuously) the combustor 106. The fuel manifold 162 typically abuts and is attached to the combustor casing 114. As stated, the fuel manifold 162 may be formed as an integral component of the combustor casing 114. The fuel manifold 162 may include one or more manifold inlets 164 through which a supply of fuel is delivered to the fuel manifold 162.

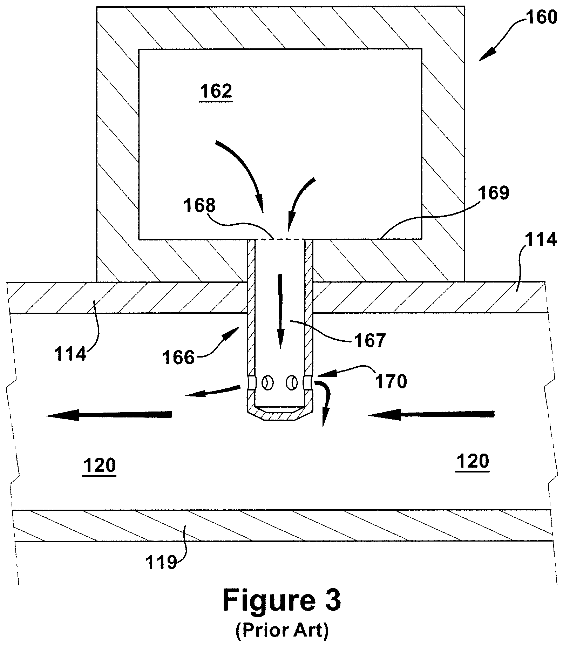

As shown in more detail in Figure 3, the annular quaternary fuel distributor 160 also may include a plurality of fuel injectors 166 spaced at intervals around the combustor 106. As shown, the fuel injectors 166 often are formed as pegs (though other configurations are possible). The fuel injectors 166 may define a fuel passageway 167 that extends from the fuel manifold 162 to a position within the flow annulus where injection of the fuel takes place. As used herein, the term "flow annulus" may be used to refer to the annulus formed between the combustor casing 114 and the structure enclosed within the combustor casing 114 (which, includes, the cap assembly 119, the liner 123, and the transition duct 126). Often, the fuel injectors 166 are positioned such that the fuel is injected into the combustor casing annulus 120 that is formed between the cap assembly 119 and the combustor casing 114. At a connection with the fuel manifold 162, the fuel injector 166 may include an injector inlet 168. Per conventional design, the injector inlet 168 may be positioned on an inner radial surface 169 of the fuel manifold 162 and may extend to injector outlets 170 that are positioned within the combustor casing annulus 120 (or other preferred injection location). The injector outlets 170 may be positioned near the distal end of the fuel injector 166. It will be appreciated that the fuel injectors 166 may be installed through the combustor casing 114. It will be further appreciated that the main function of the combustor casing fuel injector 160 is to inject fuel into the flow of air upstream of the fuel nozzles 118 so that a desirable fuel-air mixture is created. In certain embodiments, the combustor casing fuel injector 160 may inject the fuel into the flow of compressed air at a position upstream of where the flow enters the interior of the cap assembly 119 (i.e., upstream of the inlets 130). Those of ordinary skill in the art will appreciate that the use of the combustor casing fuel injector 160 of Figure 2 is exemplary only. Embodiments of the present invention may be applicable to other types of combustor casing fuel injectors 160.

As described, known types of combustor casing fuel injectors, particularly annular quaternary fuel injectors with a peg design, are susceptible to having portions of their fuel flowpath blocked by debris, which is typically in the form of rust dislodged from within the fuel manifold 162. As one of ordinary skill in the art will appreciate, this may cause damage to the combustion system, inefficient operation, and other issues. As stated, addressing this issue by using rust-free materials within the fuel manifold 162 is unsatisfactory due to high costs. In addition, the usage of coatings to prevent rusting has proven unworkable.

Figure 4 is a cross-sectional view of a combustor casing fuel injector 160 in accordance with an exemplary embodiment of the present invention. As shown, the fuel injector 166 includes a protruding injector inlet 171. In accordance with the present invention, the protruding injector inlet comprises a section of the fuel injector 166 that juts from the inner radial surface 169 of the fuel manifold 162 to a position within the interior of the fuel manifold 162 and provides an injector inlet that is offset from the interior walls of the fuel manifold, as described in more detail below. Accordingly, in certain embodiments, the protruding injector inlet 171 includes a protrusion that extends from a position on the inner radial surface 169 of the fuel manifold 162 to a position near the radial center of the fuel manifold 162. The protruding injector inlet 171, as illustrated, includes a plurality of filtering apertures 172, which provide an inlet through which fuel within the fuel manifold 162 may enter the fuel passageway 167 of the fuel injector 166. The filtering apertures 172 each includes a position on the protruding injector inlet such that a minimum aperture offset or clearance 174 is maintained between the radial height of the filtering aperture 172 and the inner radial surface 169 of the fuel manifold 162. It will be appreciated that, formed in this way, the protruding injector inlet 171 includes features similar to that of certain types of standpipe drains. This is because the protruding injector inlet 171 is configured to drain fuel from a position that is offset a distance from the surface through which the fuel is drained.

As stated, the plurality of filtering apertures 172 may be positioned on the protruding injector inlet 171 such that each maintains at least a minimum aperture clearance or offset 174 from the inner radial surface 169 of the fuel manifold 162. In certain embodiments, the length of the protruding injector inlet 171 and the positioning of the filtering apertures 172 on the protruding injector inlet may be configured such that a minimum aperture clearance or offset 176 from an outer radial surface 177 of the fuel manifold 162 is maintained. In certain preferred embodiments, the filtering apertures 172 include a location near the radial center of the fuel manifold 162.

In certain embodiments, the protruding injector inlet 171 extends from the inner radial surface 169 of the fuel manifold 162 in a manner such that it is approximately perpendicular to the inner radial surface 169. In certain embodiments, the fuel injector 166 may be approximately cylindrical in shape. The section of the fuel injector 166 that comprises the protruding injector inlet 171 also may be cylindrical in shape and, as described, may define a cylindrically fuel passageway 167 within it, as shown. The fuel passageway 167 may extend from the filtering apertures 172 within the fuel manifold 162 to the injector outlets 170 within the combustor casing annulus. Though, the fuel injectors 166 often are formed as pegs or cylindrically-shaped components, it will be appreciated that the present invention may be employed in fuel injectors having a different shape.

As stated, the protruding injector inlet 171 includes a plurality of filtering apertures 172. The filtering apertures 172 may be positioned on the protruding injector inlet 171 such that fuel is allowed to flow into the fuel passageway 167 at positions that are offset from the inner radial surface 169 of the fuel manifold 162. It will be appreciated that this offset allows the filtering apertures 172 to draw from a layer of fuel within the fuel manifold 162 that would typically contains less debris (including rust debris) than if the fuel inlet were otherwise located, for example, such as the manner in which the injector inlet 168 is configured in Figure 3. More specifically, given the configuration shown in Figure 4, the debris (particularly rust debris) will tend to settle toward the inner radial surface 169 of the fuel manifold 162. As such, the debris will be less likely to be drawn into filtering apertures 172 which are offset a minimum distance from this surface.

Further, as stated, the filtering apertures 172 may be desirably offset from the outer radial surface 177 of the fuel manifold 162. It will be appreciated that, depending on the angular position of the protruding injector inlet 171 along the exterior of the combustor casing 114, gravitational effects may cause the debris to settle toward either of the interior radial surfaces of the fuel manifold 162, i.e., the inner radial surface 169 or the outer radial surface 177. In addition, it will be appreciated that centrifugal forces may cause debris to settle toward the outer radial surface 177 depending on the flow patterns within the manifold 162. Accordingly, by having the filtering apertures 172 positioned within the fuel manifold 162 such that each maintains a position toward the radial center of the manifold, the fuel injectors 166 will be less likely to become clogged with the debris that typically tends to settle toward the radial surfaces within the fuel manifold 162. Accordingly, the fuel injectors 166 will be less likely to become clogged with ingested debris. This is particularly true of debris, like rust, that is heavy relative to the fuel flowing through the combustion system, as heavy particles will settle more rapidly.

In one preferred embodiment, the positioning of the filtering apertures 172 (i.e., the maintained aperture clearances 174, 176) varies in accordance to the gravitational effects at the particular location of one of the protruding injector inlets 171 within the fuel manifold 162. Thus, where gravitational effects would tend to settle debris toward the inner radial surface 169 of the fuel manifold 162, the filtering apertures 172 may be configured on the protruding injector inlet 171 such that an increased aperture clearance 174 from the inner radial surface 169 is maintained. Where the opposite is true (i.e., where gravitational effects would tend to settle debris toward the outer radial surface 177 of the fuel manifold 162), the filtering apertures 172 may be configured on the protruding injector inlet 171 such that an increased aperture clearance 176 from the outer radial surface 177 is maintained.

In certain embodiments, the filtering apertures 172, generally, are offset from the inner radial surface 169 by at least a fixed distance. It will be appreciated that the minimum distance by which the filtering apertures 172 are offset from the inner radial surface 169 may also be expressed as a percentage of the overall radial height of the fuel manifold 162. It has been found that performance advantages are noticed when this offset is at least 20% of the radial height of the fuel manifold 162. More preferably, this offset is at least 40% of the radial height of the fuel manifold 162.

In certain embodiments, the filtering apertures 172 are offset from the outer radial surface 177 by at least a fixed distance. The distance by which the filtering apertures 172 are offset from the outer radial surface 177 may also be expressed as a percentage of the overall height of the fuel manifold 162. It has been found that performance advantages are noticed when this offset from the outer radial surface 177 is at least 20% of the radial height of the fuel manifold 162. More preferably, this offset is at least 40% of the radial height of the fuel manifold 162.

Additionally, per embodiments of the present invention, filtering apertures 172 each may be sized such that the apertures filter or block debris from entering the fuel passageway 167 of the fuel injector 166. In some preferred embodiments, the filtering apertures 172 include a circular shape, though other shapes are possible. In preferred embodiments, the filtering apertures 172 are sized in relation to the injector outlets 170 positioned at the other end of the fuel injectors 166. In this case, the filtering apertures 172 generally are sized such that they are no larger than the injector outlets 170. In this way, debris that is small enough to enter the fuel passageway 167 of the fuel injector 166 via the filtering apertures 172 should also be small enough to flow out of the fuel injector 166 through the injector outlets 170. In a preferred embodiment, the filtering apertures 172 are sized such that they are no larger than 70% of the size of the injector outlets 170. It will be appreciated that, in this case, the 30% buffer provides a greater likelihood that any debris that passes through the filtering apertures 172 will also pass through the injector outlets 170, even when multiple pieces of debris are flowing through the injector outlets 170 at the same time. When the filtering apertures 172 and injector outlets 170 are circular in shape, "size" may refer to diameter. If, instead, the filtering apertures 172 and the injector outlets 170 are rectangular in shape, "size" may refer to the distance from opposing corners. More generally, "size" may refer to the longest linear span across the filtering aperture 172/injector outlet 170.

Further, the protruding injector inlet 171 may include a sufficient number of filtering apertures 172 so that an increased pressure drop is not experienced across the fuel injectors 166. In this manner, the present invention may be implemented such that an appreciable pressure drop across the injection system is not experienced.

Those of ordinary skill in the art will appreciate that the present invention provides a convenient, cost-effective solution to a nagging problem. This allows the casing and annulus to be made out of carbon steel and not require higher cost materials, coatings, or other processes that add cost.

## Claims

1. A gas turbine combustor casing fuel injector arrangement comprising:
a combustor casing (114) having inner and outer surfaces capable of enclosing internal structures;
a fuel manifold (162), the fuel manifold (162) comprising:
an annular fuel space surrounding the combustor casing (114) and comprising an inner radial surface (169) and an outer radial surface (177), wherein the inner radial surface (169) is adjacent to the combustor casing (114), and the outer radial surface (177) opposes the inner radial surface (169) across the fuel manifold (162);
a plurality of fuel injectors (166), each of the fuel injectors (166) comprising:
a first injector portion which protrudes from the manifold (162) across the combustor casing (114) to a location away from the inner surface of the combustor casing (114); and
a second injector portion (171) which is a continuation of the first injector portion and protrudes from the inner radial surface (169) into the fuel manifold (162),
**characterized in that** the second injector portion (171) comprises a plurality of apertures (172) and **in that** a first minimum aperture clearance (174) is provided between the plurality of apertures (172) and the inner radial surface (169) of the fuel manifold (162) and a second minimum aperture clearance (176) between the plurality of apertures (172) and the outer radial surface (177) of the fuel manifold (162) are configured such that each varies in relation to the expected effect of gravity on sinking debris given a predetermined angular position of each of the fuel injectors (166).

2. The gas turbine combustor casing fuel injector arrangement according to claim 1, wherein a predetermined fuel injection location comprises a flow annulus (120) that is formed between the combustor casing (114) and the internal structures;
wherein the fuel injector (166) comprises an injector outlet (170) disposed within the flow annulus (120) that is configured to fluidly connect a fuel passageway (167) of the fuel injector (166) to the flow annulus (120);
wherein a fuel passageway (167) is configured to fluidly connect each of the plurality of apertures (172) to the injector outlet (170); and
wherein the second injector portion (171) comprises an enclosed section that coincides with the first minimum aperture clearance (174), the enclosed section containing sealed structure that is configured to prevent fuel from entering the fuel passageway (167) at any point along the enclosed section.

3. The gas turbine combustor casing fuel injector arrangement according to claim 2, wherein the gas turbine combustor casing fuel injector (160) comprises an annular quaternary fuel distributor; and
wherein the fuel manifold (162) comprises an integral component to the combustor casing (114).

4. The gas turbine combustor casing fuel injector arrangement according to claim 2, wherein the combustor casing (114) comprises an approximate cylindrical shape;
wherein the inner radial surface (169) resides adjacent to the combustor casing (114); and
wherein the second injector portion (171) comprises a section of the fuel injector that juts from the inner radial surface (169) of the fuel manifold (162) to a position near a midpoint between the inner radial surface (169) and the outer radial surface (177).

5. The gas turbine combustor casing fuel injector arrangement according to claim 4, wherein the internal structures comprise a cap assembly (119) having an approximate cylindrical shape; and
wherein the predetermined fuel injection location comprises positions within the annulus formed between the cap assembly (119) and the combustor casing (114).

6. The gas turbine combustor casing fuel injector arrangement according to claim 5, wherein the fuel injector (166) comprises an approximate cylindrical shape;
wherein the fuel passageway (167) within the fuel injector (166) comprises an approximate cylindrical shape; and
wherein the second injector portion (171) extends approximately perpendicular from the inner radial surface (169) of the fuel manifold (162).

7. The gas turbine combustor casing fuel injector arrangement according to claim 5 or 6, wherein the plurality of apertures (172) comprise a plurality of filtering apertures,
wherein each of the plurality of filtering apertures (172) comprises an aperture (172) having a predetermined size, the predetermined size corresponding to a desired particle size to be filtered by the plurality of filtering apertures (172); and
the second injector portion (171) comprises a length and the filtering apertures (172) comprise a configuration on the second injector portion (171) such that the first minimum aperture clearance (174) from the inner radial surface (169) is maintained.

8. The gas turbine combustor casing fuel injector arrangement according to claim 7, wherein the second minimum aperture clearance (176) comprises a minimum distance by which each of the filtering apertures (176) is offset from the outer radial surface (177) of the fuel manifold (162); and
the second injector portion (171) comprises a length and the filtering apertures (172) comprise a configuration on the second injector portion (171) such that the second minimum aperture clearance (176) from the outer surface (177) is maintained.

9. The gas turbine combustor casing fuel injector arrangement according to claim 7, wherein each of the plurality of filtering apertures (172) is sized relative to the injector outlet (170); and
wherein the size of each of the plurality of filtering apertures (172) is no larger than the size of the injector outlet (170).

10. The gas turbine combustor casing fuel injector arrangement according to claim 9, wherein the size of each of the plurality of filtering apertures (172) is no larger than 70% of the size of the injector outlet (170).

11. The gas turbine combustor casing fuel injector arrangement according to any of claims 7 to 10, wherein the number and flow area of the plurality of filtering apertures (172) are configured based upon a desired pressure drop across the fuel injector (166).

12. The gas turbine combustor casing fuel injector arrangement according to claim 1, wherein, at the predetermined angular positions at which the expected effect of gravity settles sinking debris toward the inner radial surface (169) of the fuel manifold (162), the filtering apertures (172) comprise an increased first minimum aperture clearance (174); and
wherein, at the predetermined angular positions at which the expected effect of gravity settles sinking debris toward the outer radial surface (177) of the fuel manifold (162), the filtering apertures (172) comprise an increased second minimum aperture clearance (176).

13. The gas turbine combustor casing fuel injector arrangement according to any of claims 7 to 12, wherein the fuel manifold (162) comprises a radial height measuring the approximate distance from the inner radial surface (169) to the outer radial surface (177); and
wherein the first and second minimum aperture clearances (174, 176) comprises at least 20% of the height of the fuel manifold (162).

## Patentansprüche

1. Gasturbinenbrennkammergehäuse-Brennstoffeinspritzdüsenanordnung, umfassend:
ein Brennkammergehäuse (114), aufweisend innere und äußere Oberflächen, die in der Lage sind, innere Strukturen zu umschließen;
einen Brennstoffverteiler (162), wobei der Brennstoffverteiler (162) umfasst:
einen ringförmigen Brennstoffraum, der das Brennkammergehäuse (114) umgibt und eine innere radiale Oberfläche (169) und eine äußere radiale Oberfläche (177) umfasst, wobei die innere radiale Oberfläche (169) an das Brennkammergehäuse (114) angrenzt und die äußere radiale Oberfläche (177) der inneren radialen Oberfläche (169) über den Brennstoffverteiler (162) hinweg gegenüberliegt;
eine Vielzahl von Brennstoffeinspritzdüsen (166), wobei jede der Brennstoffeinspritzdüsen (166) umfasst:
einen ersten Einspritzdüsenabschnitt, der vom Verteiler (162) über das Brennkammergehäuse (114) hinweg zu einer von der inneren Oberfläche des Brennkammergehäuses (114) entfernten Stelle hervorsteht; und
einen zweiten Einspritzdüsenabschnitt (171), der eine Fortsetzung des ersten Einspritzdüsenabschnitts ist und von der inneren radialen Oberfläche (169) in den Brennstoffverteiler (162) hervorsteht,
**dadurch gekennzeichnet, dass** der zweite Einspritzdüsenabschnitt (171) eine Vielzahl von Öffnungen (172) umfasst und dass ein erster Mindestöffnungszwischenraum (174) zwischen der Vielzahl von Öffnungen (172) und der inneren radialen Oberfläche (169) des Brennstoffverteilers (162) bereitgestellt ist und ein zweiter Mindestöffnungszwischenraum (176) zwischen der Vielzahl von Öffnungen (172) und der äußeren radialen Oberfläche (177) des Brennstoffverteilers (162) so konfiguriert sind, dass jede in Bezug auf die erwartete Wirkung der Schwerkraft auf absinkenden Schmutz bei einer vorgegebenen Winkelposition jeder der Brennstoffeinspritzdüsen (166) variiert.

2. Gasturbinenbrennkammergehäuse-Brennstoffeinspritzdüsenanordnung nach Anspruch 1, wobei eine vorgegebene Brennstoffeinspritzdüsenposition einen Strömungsringraum (120) umfasst, der zwischen dem Brennkammergehäuse (114) und den inneren Strukturen gebildet ist;
wobei die Brennstoffeinspritzdüse (166) einen Einspritzdüsenauslass (170) umfasst, der innerhalb des Strömungsrings (120) angeordnet ist, der konfiguriert ist, einen Brennstoffdurchgang (167) der Brennstoffeinspritzdüse (166) fluidisch mit dem Strömungsring (120) zu verbinden;
wobei ein Brennstoffdurchgang (167) konfiguriert ist, jede der Vielzahl von Öffnungen (172) fluidisch mit dem Einspritzdüsenauslass (170) zu verbinden; und
wobei der zweite Einspritzdüsenabschnitt (171) einen umschlossenen Abschnitt umfasst, der mit dem ersten Mindestöffnungszwischenraum (174) zusammenfällt, wobei der umschlossene Abschnitt eine abgedichtete Struktur enthält, die konfiguriert ist, zu verhindern, dass Brennstoff an einem beliebigen Punkt entlang des umschlossenen Abschnitts in den Brennstoffdurchgang (167) eintritt.

3. Gasturbinenbrennkammergehäuse-Brennstoffeinspritzdüsenanordnung nach Anspruch 2, wobei die Gasturbinenbrennkammergehäuse-Brennstoffeinspritzdüse (160) einen ringförmigen quartären Brennstoffverteiler umfasst; und
wobei der Brennstoffverteiler (162) eine integrale Komponente des Brennkammergehäuses (114) umfasst.

4. Gasturbinenbrennkammergehäuse-Brennstoffeinspritzdüsenanordnung nach Anspruch 2, wobei das Brennkammergehäuse (114) eine annähernd zylindrische Form umfasst;
wobei sich die innere radiale Oberfläche (169) angrenzend an das Brennkammergehäuse (114) befindet; und
wobei der zweite Einspritzdüsenabschnitt (171) einen Abschnitt der Brennstoffeinspritzdüse umfasst, der aus der inneren radialen Oberfläche (169) des Brennstoffverteilers (162) zu einer Position nahe einem Mittelpunkt zwischen der inneren radialen Oberfläche (169) und der äußeren radialen Oberfläche (177) herausragt.

5. Gasturbinenbrennkammergehäuse-Brennstoffeinspritzdüsenanordnung nach Anspruch 4, wobei die inneren Strukturen eine Kappenbaugruppe (119) umfassen, die eine annähernd zylindrische Form aufweisen; und
wobei die vorgegebene Brennstoffeinspritzdüsenposition Positionen innerhalb des Rings umfasst, der zwischen der Kappenbaugruppe (119) und dem Brennkammergehäuse (114) gebildet ist.

6. Gasturbinenbrennkammergehäuse-Brennstoffeinspritzdüsenanordnung nach Anspruch 5, wobei die Brennstoffeinspritzdüse (166) eine annähernd zylindrische Form umfasst;
wobei der Brennstoffdurchgang (167) innerhalb der Brennstoffeinspritzdüse (166) eine annähernd zylindrische Form umfasst; und
wobei sich der zweite Einspritzdüsenabschnitt (171) ungefähr senkrecht von der inneren radialen Oberfläche (169) des Brennstoffverteilers (162) erstreckt.

7. Gasturbinenbrennkammergehäuse-Brennstoffeinspritzdüsenanordnung nach Anspruch 5 oder 6, wobei die Vielzahl von Öffnungen (172) eine Vielzahl von Filterungsöffnungen umfasst,
wobei jede der Vielzahl von Filteröffnungen (172) eine Öffnung (172) umfasst, die eine vorgegebene Größe aufweist, wobei die vorgegebene Größe einer gewünschten Partikelgröße entspricht, die durch die Vielzahl von Filteröffnungen (172) zu filtern ist; und
der zweite Einspritzdüsenabschnitt (171) eine Länge umfasst und die Filteröffnungen (172) eine Konfiguration am zweiten Einspritzdüsenabschnitt (171) umfassen, sodass der erste Mindestöffnungszwischenraum (174) von der inneren radialen Oberfläche (169) aufrechterhalten wird.

8. Gasturbinenbrennkammergehäuse-Brennstoffeinspritzdüsenanordnung nach Anspruch 7, wobei der zweite Mindestöffnungszwischenraum (176) einen Mindestabstand umfasst, um den jede der Filteröffnungen (176) von der äußeren radialen Oberfläche (177) des Brennstoffverteilers (162) versetzt ist; und
der zweite Einspritzdüsenabschnitt (171) eine Länge umfasst und die Filteröffnungen (172) eine Konfiguration am zweiten Einspritzdüsenabschnitt (171) umfassen, sodass der zweite Mindestöffnungszwischenraum (176) von der äußeren Oberfläche (177) aufrechterhalten wird.

9. Gasturbinenbrennkammergehäuse-Brennstoffeinspritzdüsenanordnung nach Anspruch 7, wobei jede der Vielzahl von Filteröffnungen (172) in Bezug auf den Einspritzdüsenauslass (170) bemessen ist; und
wobei die Größe jeder der Vielzahl von Filteröffnungen (172) nicht größer als die Größe des Einspritzdüsenauslasses (170) ist.

10. Gasturbinenbrennkammergehäuse-Brennstoffeinspritzdüsenanordnung nach Anspruch 9, wobei die Größe jeder der Vielzahl von Filteröffnungen (172) nicht größer als 70 % der Größe des Einspritzdüsenauslasses (170) ist.

11. Gasturbinen-Brennkammergehäuse-Brennstoffeinspritzdüsenanordnung nach einem der Ansprüche 7 bis 10, wobei die Anzahl und der Strömungsbereich der Vielzahl von Filteröffnungen (172) auf der Grundlage eines gewünschten Druckabfalls über die Brennstoffeinspritzdüse (166) konfiguriert sind.

12. Gasturbinenbrennkammergehäuse-Brennstoffeinspritzdüsenanordnung nach Anspruch 1, wobei die Filteröffnungen (172) an den vorgegebenen Winkelpositionen, an denen die erwartete Wirkung der Schwerkraft absinkenden Schmutz in Richtung der inneren radialen Oberfläche (169) des Brennstoffverteilers (162) absetzen lässt, einen erhöhten ersten Mindestöffnungszwischenraum (174) umfassen; und
wobei die Filteröffnungen (172) an den vorgegebenen Winkelpositionen, an denen die erwartete Wirkung der Schwerkraft absinkenden Schmutz in Richtung der äußeren radialen Oberfläche (177) des Brennstoffverteilers (162) absetzen lässt, einen erhöhten zweiten Mindestöffnungszwischenraum (176) umfassen.

13. Gasturbinenbrennkammergehäuse-Brennstoffeinspritzdüsenanordnung nach einem der Ansprüche 7 bis 12, wobei der Brennstoffverteiler (162) eine radiale Höhe umfasst, die dem ungefähren Abstand von der inneren radialen Oberfläche (169) zur äußeren radialen Oberfläche (177) entspricht; und
wobei der erste und der zweite Mindestöffnungszwischenraum (174, 176) mindestens 20 % der Höhe des Brennstoffverteilers (162) umfassen.

## Revendications

1. Agencement d'injecteur de carburant pour carter de chambre de combustion de turbine à gaz comprenant :
un carter de chambre de combustion (114) comportant des surfaces interne et externe capables de renfermer des structures internes ;
un collecteur de carburant (162), le collecteur de carburant (162) comprenant :
un espace annulaire de combustible entourant le carter de chambre de combustion (114) et comprenant une surface radiale interne (169) et une surface radiale externe (177), dans lequel la surface radiale interne (169) est adjacente au carter de chambre de combustion (114), et la surface radiale externe (177) s'oppose à la surface radiale interne (169) à travers le collecteur de carburant (162) ;
une pluralité d'injecteurs de carburant (166), chacun des injecteurs de carburant (166) comprenant :
une première partie d'injecteur qui fait saillie depuis le collecteur (162) à travers le carter de chambre de combustion (114) jusqu'à un emplacement éloigné de la surface interne du carter de chambre de combustion (114) ; et
une deuxième partie d'injecteur (171) qui est un prolongement de la première partie d'injecteur et fait saillie depuis la surface radiale interne (169) dans le collecteur de carburant (162),
**caractérisé en ce que** la deuxième partie d'injecteur (171) comprend une pluralité d'ouvertures (172) et **en ce qu'** un premier jeu d'ouvertures minimum (174) est prévu entre la pluralité d'ouvertures (172) et la surface radiale interne (169) du collecteur de carburant (162) et un deuxième jeu d'ouvertures minimum (176) entre la pluralité d'ouvertures (172) et la surface radiale externe (177) du collecteur de carburant (162) sont configurées de sorte que chacune varie en relation avec l'effet attendu de gravité sur des débris d'enfoncement étant donné une position angulaire prédéterminée de chacun des injecteurs de carburant (166).

2. Agencement d'injecteur de carburant pour carter de chambre de combustion de turbine à gaz selon la revendication 1, dans lequel un emplacement d'injection de carburant prédéterminé comprend un espace annulaire d'écoulement (120) qui est formé entre le carter de la chambre de combustion (114) et les structures internes ;
dans lequel l'injecteur de carburant (166) comprend une sortie d'injecteur (170) disposée à l'intérieur de l'espace annulaire d'écoulement (120) qui est configuré pour relier de manière fluidique un passage de carburant (167) de l'injecteur de carburant (166) à l'espace annulaire d'écoulement (120) ;
dans lequel un passage de carburant (167) est configuré pour relier de manière fluidique chacune de la pluralité d'ouvertures (172) à la sortie d'injecteur (170) ; et
dans lequel la deuxième partie d'injecteur (171) comprend une section fermée qui coïncide avec le premier jeu d'ouvertures minimum (174), la section fermée contenant une structure scellée qui est configurée pour empêcher le carburant d'entrer dans le passage de carburant (167) en un point quelconque le long de la section fermée.

3. Agencement d'injecteur de carburant pour carter de chambre de combustion de turbine à gaz selon la revendication 2, dans lequel l'injecteur de gaz pour carter de chambre de combustion à turbine à gaz (160) comprend un distributeur de carburant quaternaire annulaire ; et
dans lequel le collecteur de carburant (162) comprend un composant d'un seul tenant avec le carter de chambre de combustion (114).

4. Agencement d'injecteur de carburant pour carter de chambre de combustion de turbine à gaz selon la revendication 2, dans lequel le carter de chambre de combustion (114) comprend une forme cylindrique approximative ;
dans lequel la surface radiale interne (169) est adjacente au carter de chambre de combustion (114) ; et
dans lequel la deuxième partie d'injecteur (171) comprend une section de l'injecteur de carburant qui fait saillie depuis la surface radiale interne (169) du collecteur de carburant (162) vers une position proche d'un point médian entre la surface radiale interne (169) et la surface radiale externe (177).

5. Agencement d'injecteur de carburant pour carter de chambre de combustion de turbine à gaz selon la revendication 4, dans lequel les structures internes comprennent un ensemble de capuchon (119) présentant une forme cylindrique approximative ; et
dans lequel l'emplacement d'injection de carburant prédéterminé comprend des positions dans l'espace annulaire formé entre l'ensemble de capuchon (119) et le carter de chambre de combustion (114).

6. Agencement d'injecteur de carburant pour carter de chambre de combustion de turbine à gaz selon la revendication 5, dans lequel l'injecteur de carburant (166) comprend une forme cylindrique approximative ;
dans lequel le passage de carburant (167) à l'intérieur de l'injecteur de carburant (166) comprend une forme cylindrique approximative ; et
dans lequel la deuxième partie d'injecteur (171) s'étend approximativement perpendiculairement depuis la surface radiale interne (169) du collecteur de carburant (162).

7. Agencement d'injecteur de carburant pour carter de chambre de combustion de turbine à gaz selon la revendication 5 ou 6, dans lequel la pluralité d'ouvertures (172) comprend une pluralité d'ouvertures de filtrage.
dans lequel chacune parmi la pluralité d'ouvertures de filtrage (172) comprend une ouverture (172) présentant une dimension prédéterminée, la dimension prédéterminée correspondant à une taille des particules souhaitée pour être filtrée par la pluralité d'ouvertures de filtrage (172) ; et
la deuxième partie d'injecteur (171) comprend une longueur et des ouvertures de filtrage (172) comprennent une configuration sur la deuxième partie d'injecteur (171) de sorte que le premier jeu d'ouvertures minimum (174) depuis la surface radiale interne (169) est maintenu.

8. Agencement d'injecteur de carburant pour carter de chambre de combustion de turbine à gaz selon la revendication 7, dans lequel le deuxième jeu d'ouvertures minimum (176) comprend une distance minimale par laquelle chacune des ouvertures de filtrage (176) est décalée de la surface radiale externe (177) du collecteur de carburant (162) ; et
la deuxième partie d'injecteur (171) comprend une longueur et les ouvertures de filtrage (172) comprennent une configuration sur la deuxième partie d'injecteur (171) de sorte que le deuxième jeu d'ouvertures minimum (176) depuis la surface externe (177) est maintenu.

9. Agencement d'injecteur de carburant pour carter de chambre de combustion de turbine à gaz selon la revendication 7, dans lequel chacune parmi la pluralité d'ouvertures de filtrage (172) est dimensionnée par rapport à la sortie de l'injecteur (170) ; et
dans lequel la dimension de chacune de la pluralité d'ouvertures de filtrage (172) n'est pas supérieure à la dimension de la sortie d'injecteur (170).

10. Agencement d'injecteur de carburant pour carter de chambre de combustion de turbine à gaz selon la revendication 9, dans lequel la dimension de chacune de la pluralité d'ouvertures de filtrage (172) n'est pas supérieure à 70 % de la dimension de la sortie d'injecteur (170).

11. Agencement d'injecteur de carburant pour carter de chambre de combustion de turbine à gaz selon l'une quelconque des revendications 7 à 10, dans lequel le nombre et la superficie d'écoulement de la pluralité d'ouvertures de filtrage (172) sont configurés sur la base d'une chute de pression souhaitée à travers l'injecteur de carburant (166).

12. Agencement d'injecteur de carburant pour carter de chambre de combustion de turbine à gaz selon la revendication 1, dans lequel, aux positions angulaires prédéterminées auxquelles l'effet attendu de la gravité provoque le dépôt de débris d'enfoncement vers la surface radiale interne (169) du collecteur de carburant (162), les ouvertures de filtrage (172) comprennent un premier jeu d'ouvertures minimum accru (174) ; et
dans lequel, au niveau des positions angulaires prédéterminées auxquelles l'effet attendu de la gravité provoque le dépôt des débris d'enfoncement vers la surface radiale externe (177) du collecteur de carburant (162), les ouvertures de filtrage (172) comprennent un deuxième jeu d'ouvertures minimum accru (176).

13. Agencement d'injecteur de carburant pour carter de chambre de combustion de turbine à gaz selon l'une quelconque des revendications 7 à 12, dans lequel le collecteur de carburant (162) comprend une hauteur radiale mesurant la distance approximative entre la surface radiale interne (169) et la surface radiale externe (177) ; et
dans lequel les premier et deuxième jeux d'ouvertures minimum (174, 176) comprennent au moins 20 % de la hauteur du collecteur de carburant (162).
